Europäisches Patentamt

**European Patent Office**

Office européen des brevets

(11) Numéro de publication: **0 251 965 B1**

## FASCICULE DE BREVET EUROPEEN

(45) Date de publication de fascicule du brevet:
09.10.91

(51) Int. Cl.⁵: **H04L 12/56**

(21) Numéro de dépôt: 87460010.9

(22) Date de dépôt: 01.06.87

(54) Système de commutation de paquets de données.

(30) Priorité: 30.06.86 FR 8609580

(43) Date de publication de la demande:
07.01.88 Bulletin 88/01

(45) Mention de la délivrance du brevet:
09.10.91 Bulletin 91/41

(84) Etats contractants désignés:
DE GB NL SE

(56) Documents cités:
FR-A- 2 549 673

IEEE INTERNATIONAL CONFERENCE ON
COMMUNICATIONS, Conference Record, Philadelphia, 13-17 juin 1982, vol. 3, pages
5C.3.1 - 5C.3.5, IEEE, New York, US: F. ISHINO
et al.: "A high throughput packet switching
system"

(73) Titulaire: **ETAT FRANCAIS représenté par le
Ministre des PTT (Centre National d'Etudes
des Télécommunications)
38-40 rue du Général Leclerc
F-92131 Issy-les-Moulineaux(FR)**

Titulaire: **Etablissement Public de Diffusion
dit "Télédiffusion de France"
21-27 rue Barbès
F-92120 Montrouge(FR)**

(72) Inventeur: **Coatrieux, Jean-Yvon
4 rue Anne de Bretagne
F-35590 L'Hermitage(FR)**
Inventeur: **Cheminel, Daniel
3 rue Descartes
F-35100 Rennes(FR)**
Inventeur: **Thepaut, Bernard
16 Chemin François Luzel
F-35740 Pacé(FR)**

(74) Mandataire: **Le Guen, Louis François
CABINET Louis LE GUEN 38, rue Levavasseur
B.P. 91
F-35802 Dinard Cédex(FR)**

Rank Xerox (UK) Business Services

## Description

La présente invention concerne un système de commutation de paquets de données et, plus particulièrement, un centre de commutation de transit utilisable dans un réseau de transmission de paquets de données.

Dans un réseau de commutation et de transmission hiérarchisé, les centres de commutation de transit traitent des trafics importants. Quand, dans un réseau, le nombre des centres de commutation de transit augmente, c'est le maillage du réseau de transit qui se complique. Pour réduire la complexité de ce maillage, on est conduit à prévoir des supercentres de commutation de transit. Ce problème n'est pas spécifique aux réseaux de transmission de données, il existait déjà dans les réseaux de commutation téléphonique, dans lesquels sont prévus, à côté des centres de transit ordinaires, quelques centres de transit nationaux. Le problème existera, bien sûr, dans le réseau numérique à intégration de service ou réseau RNIS, actuellement en cours de développement.

Le réseau français de transmission et de commutation de données par paquets, connu sous le nom de TRANSPAC, dont le nombre de centres de commutation est actuellement de 25, nécessite déjà l'utilisation de centres de commutation de transit. Les centres de transit qui ont été développés à cet effet ont toutefois un trafic limité à 7500 paquets par seconde. Cette puissance de traitement limitée conduirait à faire croître le nombre de centres de transit, avec, par conséquent, un maillage complexe.

Un objet de la présente invention consiste à prévoir un supercentre de commutation de transit qui soit capable de commuter jusqu'à 100 000 paquets par seconde.

Les performances des systèmes de commutation de paquets connus sont actuellement limitées par l'utilisation de procédures de transmission complexes, par l'utilisation de mémoires de stockage importantes, et par l'utilisation d'architectures des systèmes informatiques existants. A cet égard, dans les systemes informatiques, les échanges de données se font par l'intermédiaire de bus classiques peu rapides qui limitent le trafic au chiffre mentionné ci-dessus de 7500 paquets par seconde.

Il est connu également du document FR-A-2 549 673 un système de commutation de paquets de données comportant une pluralité de circuits d'entrée et de sortie respectivement recevant et transmettant des paquets entrants et sortants, une mémoire centrale à double accès et des circuits de gestion, des bus internes d'entrée et de sortie reliant respectivement, d'une part, les circuits d'entrée à la mémoire centrale et, d'autre part, la mémoire centrale aux circuits de sortie sélectivement sous le commande des circuits de gestion.

L'objet de la présente invention est atteint par la mise en oeuvre de bus temporels d'entrée et de sortie définis dans la revendication 1. Des mesures préférentielles additionnelles sont indiquées dans les revendications 2 à 7.

Les caractéristiques de l'invention mentionnées ci-dessus, ainsi que d'autres, apparaîtront plus clairement à la lecture de la description d'un exemple de réalisation, ladite description étant faite en relation avec les dessins joints, parmi lesquels:

la Fig. 1 est un bloc-diagramme général d'un centre de commutation de transit suivant l'invention,

la Fig. 2 est un diagramme temporel illustrant le fonctionnement du bus temporel d'entrée ou de sortie du centre de commutation de la Fig. 1,

la Fig. 3 est le schéma-bloc d'un module d'entrée du centre de commutation de la Fig. 1,

la Fig. 4 est un diagramme illustrant le fonctionnement du séquenceur du module d'entrée de la Fig. 3,

la Fig. 5 est un schéma-bloc de l'interface d'entrée du module de gestion du centre de commutation de la Fig. 1,

la Fig. 6 est un diagramme schématique illustrant le fonctionnement du module de gestion en mode de recherche de ressources d'entrée,

la Fig. 7 est un schéma-bloc d'une partie du processeur de gestion du module de gestion,

la Fig. 8 est un schéma-bloc de l'interface de sortie du module de gestion,

la Fig. 9 est un diagramme illustrant le fonctionnement du module de gestion en recherche de ressources de sortie, et

la Fig. 10 est un schéma-bloc d'un module de sortie du centre de commutation de la Fig. 1.

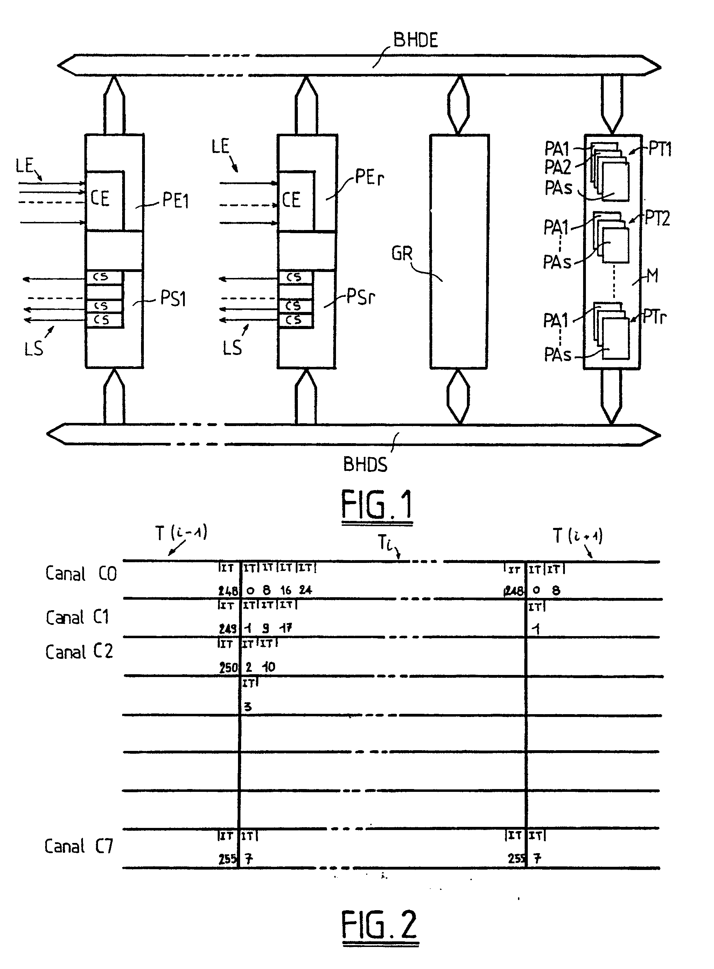

Le centre de commutation de transit de la Fig. 1 comprend une pluralité de modules d'entreé PE1 à PEn, une pluralité de modules de sortie PS1 à PSn, une mémoire centralisée à double accès M, un module de gestion de ressources GR, un bus temporel d'entrée BHDE, un bus temporel de sortie BHDS. Le centre de commutation peut éventuellement comprendre encore un bus informatique.

Chacun des modules d'entrée PE1 à PEn est, d'une part, relié, par l'intermédiaire d'un coupleur d'entrée CE, à un certain nombre de lignes d'entrée LE qui lui transmettent des paquets de données et, d'autre part, au bus temporel d'entrée BHDE auquel il transmet en mode temporel le contenu des paquets reçus du coupleur d'entrée CE associé.

Chacun des modules de sortie PS1 à PSn est relié, d'une part, par l'intermédiaire de coupleurs de sortie CS, à un certain nombre de lignes de sortie LS auxquelles il transmet des paquets de données à transmettre et, d'autre part, au bus temporel de sortie BHDS qui lui transmet en mode temporel ces paquets de données.

La mémoire centralisée M est une mémoire à double accès, un accés relié au bus temporel d'entrée BHDE pour l'écriture et un accés relié au bus temporel de sortie BHDS pour la lecture. La mémoire M est, en pratique, divisée en secteurs PT1 à PTr, eux-mêmes divisés chacun en pages PA1 à PAs. Une page PAj dans un secteur PTi forme un module de transit PTi, PAj.

Le module de gestion des ressources GR comprend un processeur de gestion contenant un microprocesseur, et deux interfaces, l'une pour l'accès au bus temporel d'entrée BHDE et l'autre pour l'accès au bus temporel de sortie BHDS. Le microprocesseur du module de gestion GR peut être choisi parmi les microprocesseurs spécialement conçus pour les centraux de commutation, en particulier les centraux de commutation de données.

Les bus BHDE et BHDS sont des bus temporels à haut débit sur lesquels les données sont transmises sur des canaux temporels qui sont définis dans des trames récursives d'intervalles de temps. Chaque trame comprend $2^k$ intervalles de temps. Comme dans l'exemple décrit $k = 8$, chaque trame comprend 256 intervalles de temps ITO à IT255. A la Fig. 2, on a représenté une trame Ti, précédée de la trame T(i-1) et suivie de la trame T-(i+1). Dans chaque colonne de la trame Ti de la Fig. 2, les intervalles de temps se succèdent et, quand on atteint le bas d'une colonne, l'intervalle de temps suivant se trouve en haut de la colonne suivante. Dans l'autre direction, les intervalles de temps se trouvent groupés en huit rangées C0 à C7. Dans le système de commutation de l'invention, chaque rangée de la séquence ininterrompue de trames correspond à un canal Ci.

Dans les deux bus temporels BHDE et BHDS, le premier canal ou canal C0 est réservé à la signalisation. Ainsi, le canal C0 du bus BHDE sert à la signalisation échangée entre, d'une part, le module de gestion GR et, d'autre part, les modules d'entrée PEi et l'accès entrée de la mémoire M. Le canal C0 du bus BHDS sert à la signalisation échangée entre, d'une part, le module de gestion GR et, d'autre part, les modules de sortie PSi et l'accès de sortie de la mémoire M.

Chacun des autres canaux C1 à C7 du bus BHDE peut être attribué à un module d'entrée PEi le temps qu'il transmette un paquet de données à l'accès entrée de la mémoire M. Chacun des canaux C1 à C7 du bus BHDS peut être attribué à un module de sortie PSi le temps qu'un accès sortie de la mémoire M lui transmette un paquet de données. L'attribution d'un des canaux C1 à C7 est commandée par signalisation à partir du module de gestion GR.

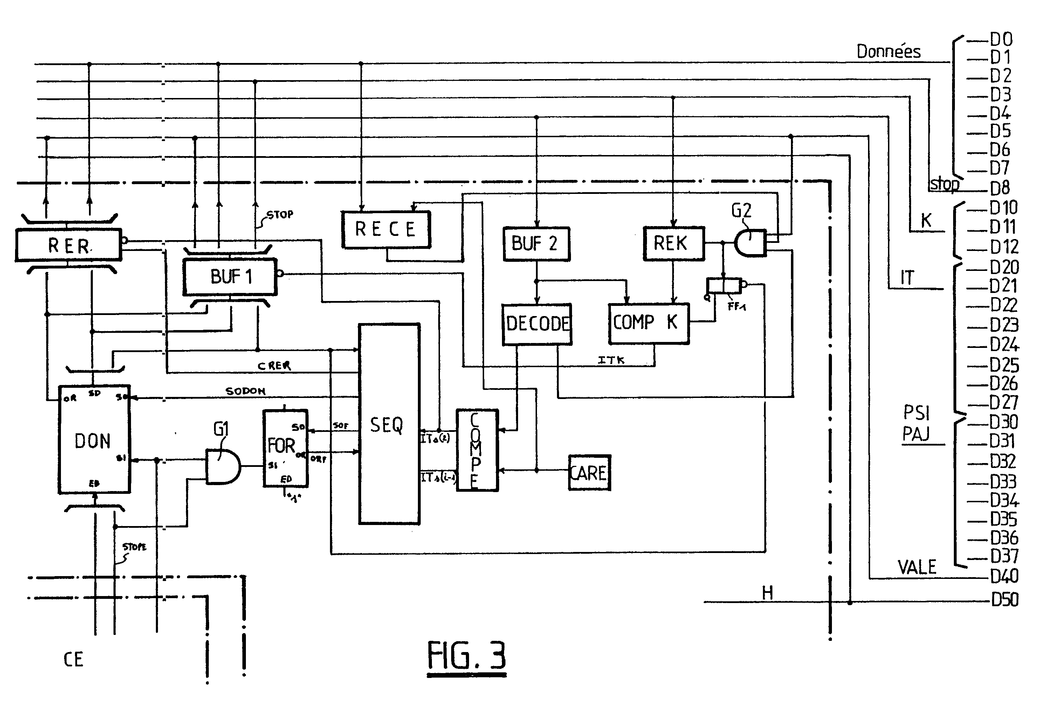

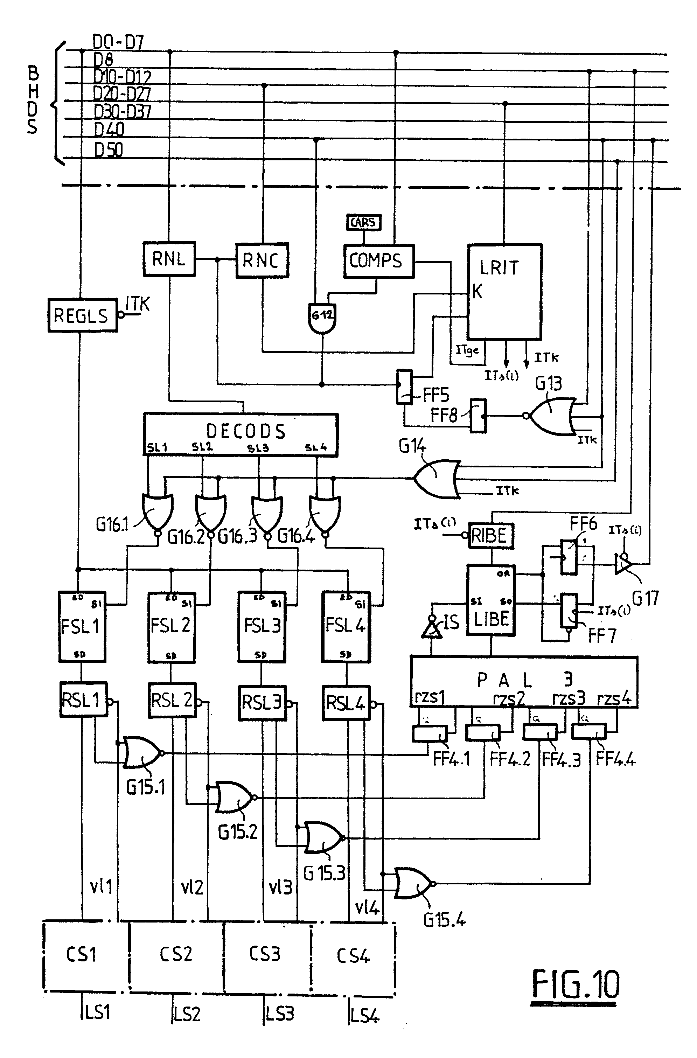

Les bus BHDE et BHDS sont identiques et, comme le montrent en détail les Figs. 3 et 10, comprennent chacun neuf fils D0 à D8 servant à transmettre des octets de données en mode parallèle et un signal STOP, trois fils D10 à D12 servant à transmettre le numéro K d'un canal, huit fils D20 à D27 servant à transmettre l'identité des intervalles de temps IT0 à IT255, huit fils D30 à D37 servant à adresser un module de transit PTi, PAj dans la mémoire centralisée M, un fil D40 servant à transmettre un signal de validation VALE et un fil D50 servant à transmette un signal d'horloge H.

En ce qui concerne le fonctionnement du bus BHDE, dans le canal C0, réservé à la signalisation, les seize intervalles de temps de rangs impairs, c.à.d. IT8, IT24, ..., sont réservés au sens de transmission du module de gestion GR vers les modules d'entrée PE1 à PEn, avec n inférieur ou égal à 16, et les seize intervalles de temps de rangs pairs, c.à.d. IT0, IT16, ..., sont respectivement réservés au sens de transmission de signalisation des modules d'entrée vers le module de gestion GR. Dans la suite, on désignera ces intervalles de temps du canal C0 par ITs(i) pour les rangs pairs, où i représente le numéro d'identification d'un module d'entrée PEi, l'ensemble des intervalles de temps ITs(i), étant désigné par ITs, et ITge pour les rangs impairs. Autrement dit, un intervalle de temps ITs(i) identifie le module d'entrée qui transmet un message de signalisation au module de gestion. Au contraire, chaque intervalle de temps ITge désigne un message transmis par le module de gestion, l'identité du module d'entrée étant contenue dans le message. En ce qui concerne le fonctionnement du bus BHDS, on retrouverait, dans son canal C0, des attributions d'intervalles de temps pairs et impairs semblables, les modules de sortie remplaçant les modules d'entrée.

Si l'on considère les mots transmis par les fils D20 à D27, il apparaît que les trois bits de poids forts transmis par D20 à D22 désignent le canal actif, quand il s'agit du canal C0, le bit transmis sur D23 définit le sens de transmission, et les quatre bits de poids faibles désignent les modules d'entrée (ou de sortie) intervenant dans la signalisation.

Sans entrer dans les détails, mais pour une meilleure compréhension du fonctionnement de l'invention, on va résumer ci-dessous une phase de fonctionnement du bus BHDE.

Quand un module d'entrée PEi est prêt à transmettre un paquet, il transmet, par les fils D0 à D7, l'octet de routage du paquet concerné, c'est-à-dire le premier octet de ce paquet, dans l'intervalle de temps pair ITs(i) qui lui est affecté dans le canal C0. Le module de gestion GR reçoit cet octet de routage et procède à la recherche d'un module de transit libre ainsi que d'un canal libre parmi les canaux C1 à C7.

Une fois trouvés le module de transit PTi, PAj libre et le canal Ci libre, le module de gestion GR transmet, dans le premier intervalle de temps libre ITge qui suit, le numéro K de ce canal libre audit module, lequel se reconnaît par son identité transmise sur les fils de données D0 à D7 du bus. A chaque intervalle de temps de ce canal Ci, le module appliquera un octet de données aux fils D0 à D7. Dans l'intervalle de temps où le dernier octet d'un paquet est transmis sur le canal Ci, le module d'entrée concerné transmet aussi un bit "1" sur le fil D8, c'est le signal STOP, qui est reçu dans le module de gestion GR qui peut alors considérer ce canal Ci comme libre et l'affecter de nouveau à l'un des modules d'entrée, peut-être le même, pour la transmission d'un autre paquet.

Par ailleurs, dans le même intervalle de temps ITge où le numéro K de canal alloué à un module d'entrée PEi est transmis, le module de gestion GR, sur les fils D30 à D37 du bus, transmet au module de mémoire M l'identité PTi, PAj du module de transit choisi. Le numéro K du canal servira ensuite au module de mémoire M d'adresse pour orienter les données du paquet vers ce module de transit. A titre d'exemple, les bits transmis sur les fils D30 à D32 servent à identifier un secteur PT1 à PTr, et les bits transmis sur les fils D33 à D37 servent à identifier une page PA1 à PAs dans ce secteur. Une page est, par exemple, prévue pour mémoriser un maximum de 256 octets.

Dans la suite, pour simplifier la description, tous les intervalles de temps faisant partie d'un même canal de numéro K, sauf le canal de signalisation, porteront la référence ITK. Le signal VALE transmis par le fil D40 accompagne chaque transmission d'information sur le bus, dans un sens ou dans l'autre. Enfin, le signal d'horloge H dont le rythme est celui des intervalles de temps est supposé appliqué dans chaque module aux circuits qui en ont besoin.

A titre indicatif, le signal d'horloge H a une fréquence de 8 MHz, ce qui, avec les huit fils de données D0 à D7, correspond à un débit maximal théorique de 56 Mbit/s.

En ce qui concerne le bus BHDS, la structure et le fonctionnement sont analogues et seront illustrés notamment lors de la description d'un module de sortie PSi, Fig. 10.

Avant de décrire en détail les différents modules du centre de transit, on rappelle qu'une mémoire FiFo, appelée dans la suite file, est pourvue d'une entrée de données ED, d'une sortie de données SD, d'une entrée de commande d'écriture SI, d'une entrée de commande de lecture SO, d'une sortie IR indiquant que la file n'est pas pleine et d'une sortie OR indiquant que la file n'est pas vide. On considérera dans la suite que le fonctionnement d'une file est bien connu.

Egalement, à la sortie de certaines files sont placés des tampons qui jouent le rôle de portes de transmission transmettant à leurs sorties les informations qui sont appliquées à leurs entrées avec un décalage de temps très court. Ces tampons sont utilisés pour éviter toute interférence entre les circuits avals des files et leurs sorties ED. Ces tampons transmettent quand ils reçoivent un signal de validation. En aval des bus, de tels tampons sont également utilisés pour bien séparer chaque bus des circuits d'utilisation.

Un module d'entrée PEi, montré à la Fig. 3, est associé à un coupleur de lignes entrantes CE dont les entrées sont reliées à un certain nombre de lignes entrantes LE. Le coupleur CE est supposé recevoir des lignes LE des données qui sont déjà rangées en paquets qui comprennent chacun leur en-tête de routage. Le coupleur comprend une mémoire tampon, non montrée, dans laquelle il est supposée savoir ranger les paquets entrants en une file de paquets. Dans l'exemple décrit, on suppose que les paquets sont formés d'octets et que l'en-tête de routage se compose d'un seul octet. Bien entendu, dans la suite, on pourrait considérer des multiplets formés de plus de huit bits chacun. La structure d'un tel coupleur CE est connue de l'homme de métier et l'on pourra, à ce sujet, se reporter à la littérature relative au système de transmission de données français "TRANSPAC".

Le coupleur CE a une sortie de données reliée à huit premiers fils de l'entrée ED d'une file de données DON, un fil de sortie STOPE relié, d'une part, au neuvième fil de l'entrée ED de la file DON et, d'autre part, à une entrée d'une porte ET G1 dont la sortie est reliée par un fil SIF à l'entrée SI d'une file de requête FOR, et un fil de commande d'écriture qui est relié, d'une part, à une entrée d'écriture SI de la file de données DON et, d'autre part, à la seconde entrée de la porte G1. Les files DON et FOR sont, ainsi que la porte G1, dans le module d'entrée.

Chaque paquet de données délivré par le coupleur CE comprend un premier octet de routage. La fin d'un paquet est indiquée par un bit "1" sur le fil STOPE.

Dans le module d'entrée, les huit fils de la sortie SD de la file de données DON sont reliés, d'une part, à l'entrée d'un registre de requête RER et, d'autre part, à l'entrée d'un tampon BUF1. Le neuvième fil STOP de la sortie SD de la file DON est relié, d'une part, à une entrée correspondante du tampon BUF1 et, d'autre part, à une entrée de commande d'un séquenceur SEQ. La file DON a son entrée de lecture SO reliée au séquenceur SEQ par un fil SODON et sa sortie OR reliée au fil D40 du bus, par l'intermédiaire du registre RER et du tampon BUF1.

La file de requête FOR a sa sortie OR reliée par un fil ORF à une entrée de commande du sequenceur SEQ et son entrée de lecteur SO reliée par un fil SOF à une sortie du séquenceur SEQ. Une entrée de commande du registre RER est reliée, par un fil CRER, à une sortie du séquenceur SEQ. Le registre RER a encore une entrée de validation à laquelle est appliqué le signal ITs(i). Le tampon BUF1 a son entrée de validation à laquelle est appliqué le signal ITK. Le séquenceur SEQ a encore deux entrées de commande auxquelles sont respectivement appliqués les signaux ITs(i) et ITs(i-1).

La sortie du registre RER est formée de huit fils qui sont respectivement reliés aux fils D0 à D7 du bus BHDE. De mème, la sortie du tampon BUF1 est formée de huits fils de données reliés aux fils D0 à D7, plus un fil STOP qui est relié au fil D8.

Le module d'entrée PE comprend encore un comparateur RECE de reconnaissance d'identité dont les premières entrées sont reliées aux fils D0 à D7 du bus BHDE, un registre REK d'enregistrement d'identité de canal dont l'entrée de données est formée de trois fils reliés aux fils D10 à D12, un tampon BUF2 dont l'entrée de données est formée de huit fils qui sont reliés aux fils D20 à D27, et une porte ET G2 à trois entrées dont la première entrée est reliée au fil D40. La sortie de la porte G2 est reliée à une entrée de validation du registre REK et a l'entrée d'horloge d'une bascule FF1 dont la sortie Q est reliée à l'entrée de validation d'une comparateur COMPK. La sortie du tampon BUF2 et celle du registre REK sont respectivement reliées aux deux entrées du comparateur COMPK dont la sortie ITK est reliée à l'entrée de validation du tampon BUF1. Par ailleurs, la sortie du tampon BUF2 est reliée à l'entrée d'un décodeur DECODE dont une sortie ITge est reliée à la seconde entrée de la porte G2 et dont une sortie est reliée à une entrée d'un second comparateur COMPE. La seconde entrée du comparateur COMPE est reliée à la sortie d'une mémoire d'identité CARE qui délivre un signal représentant l'identité du module d'entrée PEi. Le comparateur COMPE a deux sorties ITs(i) et ITs(i-1) qui sont reliées à des entrées correspondantes du séquenceur SEQ. La sortie ITs(i) est également reliée à l'entrée de validation du registre RER. La seconde entrée du comparateur RECE est également reliée à la sortie de la mémoire d'identité CARE et sa sortie est reliée à la troisième entrée de la porte G2.

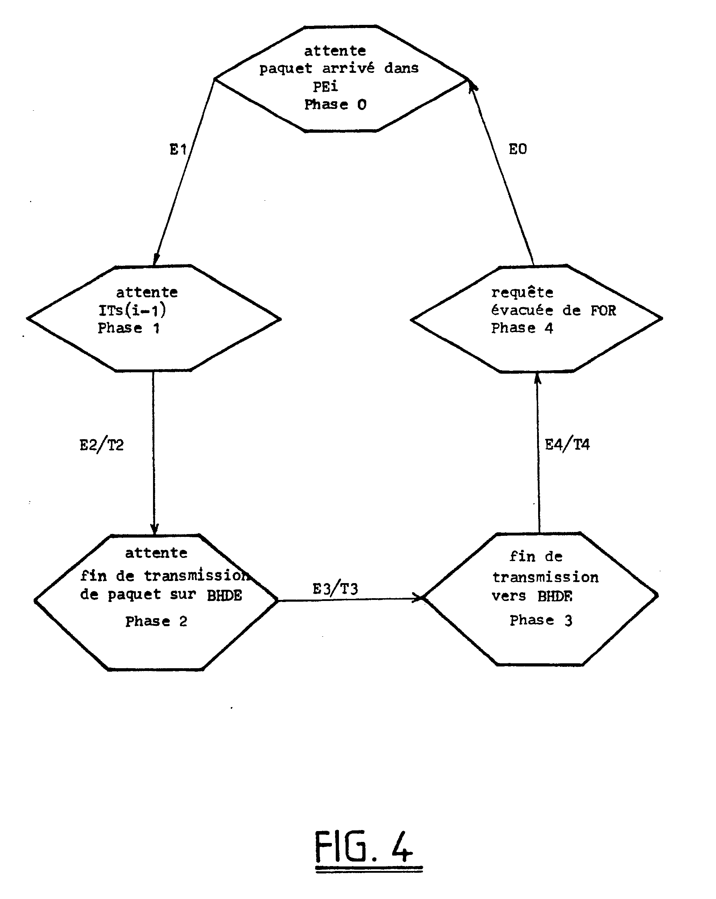

Le séquenceur SEQ est, de préférence, une mémoire PROM servant à engendrer les signaux de commande CRER, SODON et SOF. Comme le montre le diagramme de la Fig. 4, l'état du séquenceur SEQ passe, à chaque transmission d'un paquet, par cinq phases:

- Phase 0 qui correspond à l'attente d'une fin de paquet transmis du coupleur CE au module PEi,
- Phase 1 qui correspond à l'attente de l'intervalle de temps ITs(i-1) qui précède l'intervalle de temps de signalisation affecté au module PEi pour adresser une requête au module de gestion,
- Phase 2 qui correspond à l'attente de la fin du paquet à transmettre au bus HDBE,
- Phase 3 qui correspond à l'attente de la fin de la transmission du paquet vers le bus HDBE,
- Phase 4 qui correspond à la détection de l'évacuation de la file FOR.

Les événements qui font passer l'état du séquenceur d'une phase à la suivante sont, dans l'ordre, les suivants:

- E1 qui correspond au test de la sortie OR de la file FOR, la sortie OR à "1" indiquant qu'un paquet complet est arrivé dans le module d'entrée, PEi, étant entendu que le module d'entrée ne peut émettre une requête vers le module de gestion qu'après avoir reçu un paquet complet,
- E2 qui correspond à la détection de ITs(i-1),
- E3 qui correspond à la sortie du bit "1" sur le neuvième fil de la sortie SD de la file DON,
- E4 qui correspond à la fin de l'échange entre le module d'entrée et le module de transit.

Les actions engendrées au cours de chaque phase sont les suivants:

- T2 qui correspond au chargement du registre de requête RER sous la commande du signal transmis sur le fil CRER, c.à.d. au chargement de l'octet de routage dans RER, puis à l'émission du signal SODON,
- T3 qui correspond à la commande de lecture SOF de la file FOR,
- T4 qui correspond à la fin de la lecture de la file FOR.

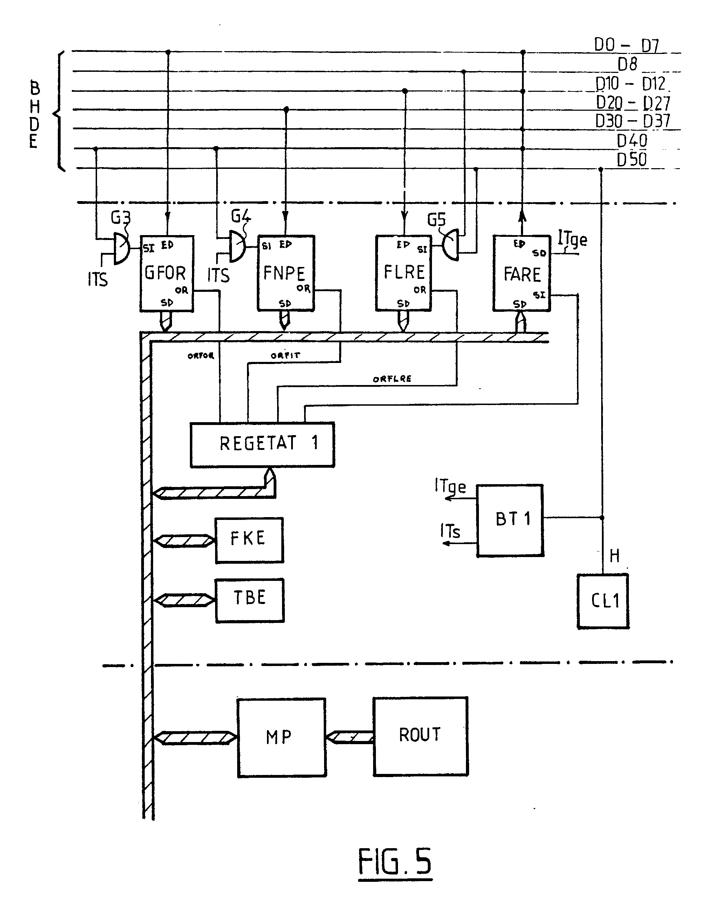

Dans le module de gestion GR, l'interface d'accès au bus BHDE, Fig. 5, comprend trois files d'entrée GFOR, FNPE et FLRE, et une file de sortie FARE. Par ailleurs, elle comprend un registre d'état REGETAT. Cette interface est reliée à un microprocesseur MP qui fait partie du processeur de gestion. Ainsi, les files et le registre d'état sont reliées au microprocesseur par un bus interne BUSINT classique.

Les sorties OR des files d'entrée GFOR, FNPE, FLRE sont respectivement reliées à des fils ORFOR, ORFIT, ORFLRE qui sont reliés à des entrées correspondantes du registre d'état REGETAT. Celui-ci a une sortie reliée, par un fil d'entrée SIFARE, à l'entrée SI de la file FARE, dont l'entrée SO reçoit le signal ITge.

L'entrée ED de la file GFOR est reliée aux fils D0 à D7 du bus BHDE, celle de la file FNPE aux fils D24 à D27, et celle de la file FLRE aux fils D10 à D12. La sortie SD de la file FARE est reliée aux fils D0 à D7, D10 à D12 et D30 à D37 du bus BHDE.

Les entrées SI des files GFOR et FNPE sont respectivement reliées aux sorties de deux portes ET G3 et G4 dont les premières entrées sont reliées au fil D40 pour recevoir le signal VALE et dont les secondes entrées reçoivent les signaux ITs. L'entrée SI de la file FLRE est reliée à la sortie d'une porte ET G5 dont une entrée est reliée au fil D8 pour recevoir un signal STOP et l'autre au fil D40 pour recevoir le signal VAL. Les entrées SO des files GFOR, FNPE et FLRE sont reliées au bus BUSINT.

En pratique, la file FNPE sert à enregistrer l'identité du module d'entrée PEi qui, dans l'intervalle de temps ITs(i) qui l'identifie dans le canal C0 de signalisation, transmet un octet de routage lequel est reçu dans la file GFOR. Les fils ORFOR et ORFIT activés transmettent au registre REGETAT1 un signal qui y est mémorisé et qui indique qu'une requête est à traiter par le microprocesseur MP. Ce dernier, quand il consulte le registre REGETAT1 cherche donc, d'une part, un secteur de transit PTi libre et, dans ce secteur, une page PAj libre, et, d'autre part, un canal Ci libre. On verra, dans la suite comment s'effectue cette recherche. Quand le résultat de la recherche est positif, le microprocesseur MP le signale au registre d'état REGETAT1 qui active le fil de commande d'écriture SIFARE de la file FARE et, par le bus BUSINT, il transmet à la file FARE l'identité du canal Ci à utiliser et l'adresse du module de transit PTi, PAj qui recevra le paquet émis par le module d'entrée PEi sur le canal Ci.

La file FLRE sert à enregistrer l'identité d'un canal libéré à la fin d'un paquet, ce qui est signalé par le fil D8 à "1" transmettant un signal STOP.

L'interface d'entrée, Fig. 5, comprend encore une horloge CL1, qui distribue les signaux d'horloge H sur le fil D50, et une base de temps BT, reliée à l'horloge CL1, pour fournir les signaux ITge et ITs correspondant respectivement aux intervalles de temps réservés à la signalisation vers les modules d'entrée ou provenant de ceux-ci dans le canal C0.

L'interface d'entrée, Fig. 5, comprend encore, reliée au bus BUSINT, une file FKE dans laquelle sont mémorisés les numéros des canaux libres, et une table TBE qui mémorise les états des modules de transit PTi, PAj du module de mémoire M.

Le microprocesseur MP, placé dans le processeur de gestion, mais relié au bus BUSINT, est capable de lire le mot mémorisé dans le registre REGETAT1 à chaque fois qu'il en a besoin. En fonction des bits à "1" de ce mot, il peut atteindre, par l'intermédiaire du bus BUSINT, les entrées de lecture SO des files GFOR, FNPE et FLRE. Il a également accès, en lecture et en écriture, à la file FKE, pour chercher un canal libre, et à la table TBE, pour chercher, d'abord une section PTi libre et, dans cette section, une page PAj libre.

Sans entrer dans les détails de la mémoire M, on suppose qu'elle comprend, par exemple, par sept cartes ou secteurs PTi, dont le codage nécessite 3 bits et que chaque carte ou secteur contient 32 pages PAj, codées sur 5 bits. Chaque page a, par exemple, une capacité maximale de 256 octets.

La mémoire M, Fig. 1, est supposée comprendre ses propres circuits de commande qui, quand ils ont reçu simultanément du bus BHDE l'identité K d'un canal et l'identité d'un module de transit PTi, PAj, sont capable d'écrire le contenu du paquet arrivant sur ce canal dans la page désignée du secteur désigné. Chaque page est associée à un pointeur d'adresse qui est incrémenté à chaque octet reçu dans la page et dont l'incrémentation est arrêtée par le bit de stop accompagnant le dernier octet du paquet. La valeur du pointeur, qui mesure la longueur du paquet, est alors mémorisée dans une zone appropriée de mémoire dite mémoire de longueur.

Chaque page est également associée à un pointeur de sortie dont le contenu sera, au cours de la lecture du paquet mémorisé vers le bus BHDS, continuellement comparée avec la valeur emmagasinée dans la mémoire de longueur de manière à délivrer un signal stop avec le dernier octet du paquet.

On va maintenant décrire le fonctionnement d'un module d'entrée PEi et du module de gestion GR en ce qui concerne la transmission d'un paquet entrant par le module d'entrée PEi vers un module de transit PTi, PAj.

En supposant que la file DON n'est pas pleine, le coupleur d'entrée CE, Fig. 3, commande l'entrée SI de cette file pour y écrire des paquets par l'entrée ED. Les mots des paquets sont des octets et un neuvième fil est prévu pour transmettre un bit par fin de paquet. Par la porte G1, chaque fin de paquet active l'entrée d'écriture de la file de requête FOR et un bit "1" y est écrit. La sortie OR est activée ce qui déclenche le cycle de fonctionnement du séquenceur SEQ.

Par ailleurs, d'une manière continue, le tampon BUF2 suit l'évolution du mot d'intervalle de temps transmis par les fils D20 à D27. Ce mot est transmis au décodeur DECODE qui en déduit les identités successives des intervalles de temps du canal C0, c"est-à-dire que, sur une sortie, il délivre les signaux correspondant aux intervalles de temps ITge, le signal émis portant le même référence, et, sur l'autre sortie, les signaux successifs correspondant aux divers modules d'entrée, soit les signaux ITs(1), ..., ITs(i-1), ITs(i), ..., ITs(16). Ces derniers signaux sont comparés avec le contenu de la mémoire CAR dans le comparateur COMPE qui, pour le module d'entrée de rang i, délivre un premier signal au temps ITs(i-1), puis un second signal au temps ITs(i). Le premier signal appliqué au séquenceur SEQ, qui supposé avoir été activé par la sortie OR de la file FOR, y fait engendrer le signal CRER qui fait lire l'octet de routage de la file DON vers le registre RER. Le signal suivant Its(i) déclenche la lecture du contenu du registre RER sur les fils D0 à D7.

A cet instant ITs(i), les fils D20 à D27 du bus BHDE identifie également le même instant. Donc, les files GFOR et FNPE du module de gestion GR, Fig. 5, enregistrent respectivement l'octet de routage et ITs(i). Si la file GFOR était auparavant vide, la sortie OR place, dans le registre d'état REGETAT1, le bit correspondant à "1". Le microprocesseur MP, après consultation du mot du registre d'état REGETAT1, prend en compte la requête d'échange d'entrée et cherche un canal libre en consultant la file FKE et un module de transit libre en consultant la table TBE. Tant que cette recherche est négative, le microprocesseur MP ne modifie pas l'état des files GFOR et FNPE. Dès que la recherche est positive, le microprocesseur MP charge dans la file FARE l'identité K du canal lue dans la file FKE et l'identité PTi, PAj du module de transit libre lue dans la table TBE. Il traduit ensuite le contenu du premier mot de la file FNPE pour en déduire l'identité du module d'entrée appelant et transmet cette identité à la file FARE.

Si l'on suppose que la file FARE était vide avant de recevoir ces informations, à l'instant ITge qui suit, la sortie SO de la file FARE est activée et sont transmis sur les fils D0 à D7 du bus BHDE, l'identité du module d'entrée appelant, sur les fils D10 à D12, l'identité K du canal et, sur les fils D30 à D37, l'identité du module de transit.

Dans le module d'entrée PEi, Fig. 3, par le tampon BUF2, le décodeur DECODE reconnaît un intervalle ITge et active sa sortie correspondante. par ailleurs, dans le comparateur RECE, l'identité du module est reconnue. Donc, deux entrées de la porte G2 sont activés, alors que la signal VAL apparaît sur la troisième. La sortie de la porte G2 active le registre REK qui mémorise l'identité K du canal et positionne le bascule FF1 de manière à ce que le comparateur COMPK fonctionne.

Il en résulte qu'à chaque fois que l'identité de l'intervalle de temps sur les fils D20 à D27 correspondra à un intervalle de temps du canal K, le comparateur COMPK activera le fil ITK et que le tampon BUF1 appliquera aux fils de données D0 à D7, un octet lu dans la file DON.

Parallèlement dans le module de mémoire, les circuits de commande mentionnés plus haut ont été positionnés de manière qu'à chaque intervalle de temps du canal K, l'octet présent sur les fils D0 à D7 soit rangé dans la page PAj de la section PSi. Le pointeur d'adresse affecté à cette page est incrémenté à chaque octet qui y est reçu.

Quand apparaît à la sortie de la file DON, le dernier octet du paquet transmis par le coupleur CE, il est accompagné du bit de STOP à "1". Le séquenceur SEQ change alors d'état et, à la sortie du tampon BUF1, apparaît un bit "1" sur le fil D8. Dans le module de gestion GR, la porte G3 est alors activée par ses deux entrées, et l'identité de l'intervalle de temps est écrite dans la file FLRE. Enfin, la bascule FF1 est remise à zéro, ce qui inhibe le comparateur COMPK et supprime le signal ITK sur le tampon BUF1. En conséquence, la lecture de la file DON est interrompue et le module d'entrée PEi cesse d'émettre.

Dans le module de gestion GR, la file FLRE est lue par le microprocesseur MP et l'identité K du canal qui vient d'être libéré est écrite dans la file FKE.

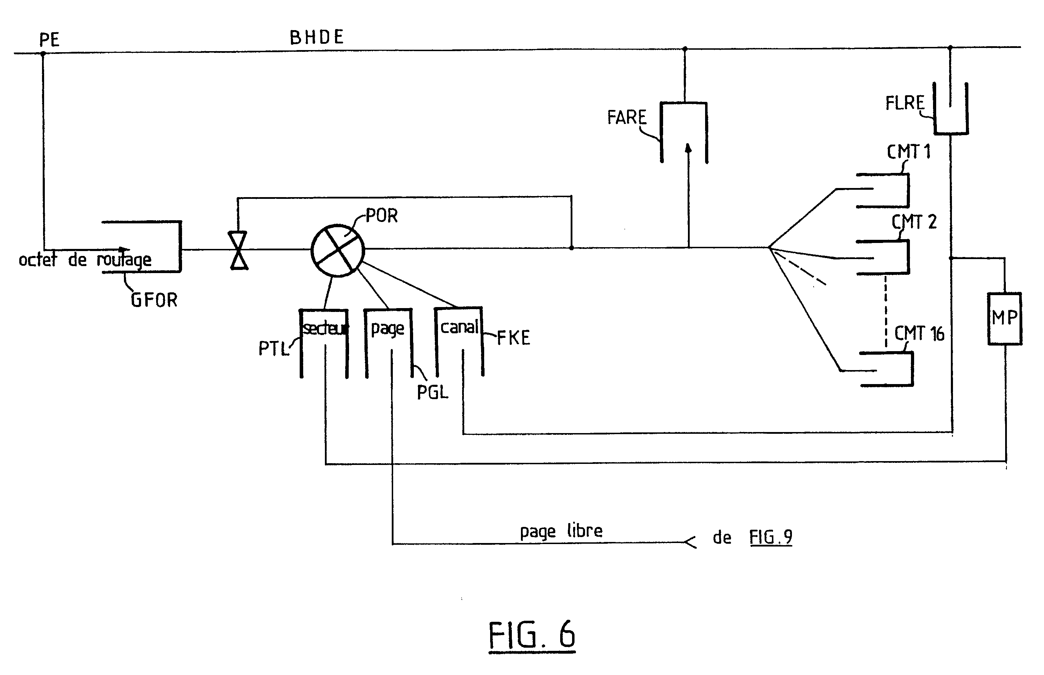

Le diagramme de la Fig. 6 résume le processus suivi par le microprocesseur MP pour l'attribution des ressources en entrée, c'est-à-dire l'attribution d'un canal libre et d'un module de transit libre. Il apparaît que, par le bus BHDE, un module d'entrée PEi dépose un octet de routage dans la file GFOR. Le microprocesseur MP consulte alors la file des canaux libres FKE et la table TBE qui peut consister en deux files PTL et PGL, l'une pour les secteurs libres, l'autre pour les pages libres. Quand les trois sorties OR des files FKE, PTL et PGL sont activées la porte POR est ouverte pour faire passer les mots lus dans ces trois files vers l'entrée de la file FARE. Simultanément, le premier octet de routage lu dans la file GFOR est transmis pour analyse au microprocesseur MP qui sélecte une file parmi la pluralité de files CMT1 à CMT16 et y inscrit l'identité du module de transit délivré par les fils PTL et PGL.

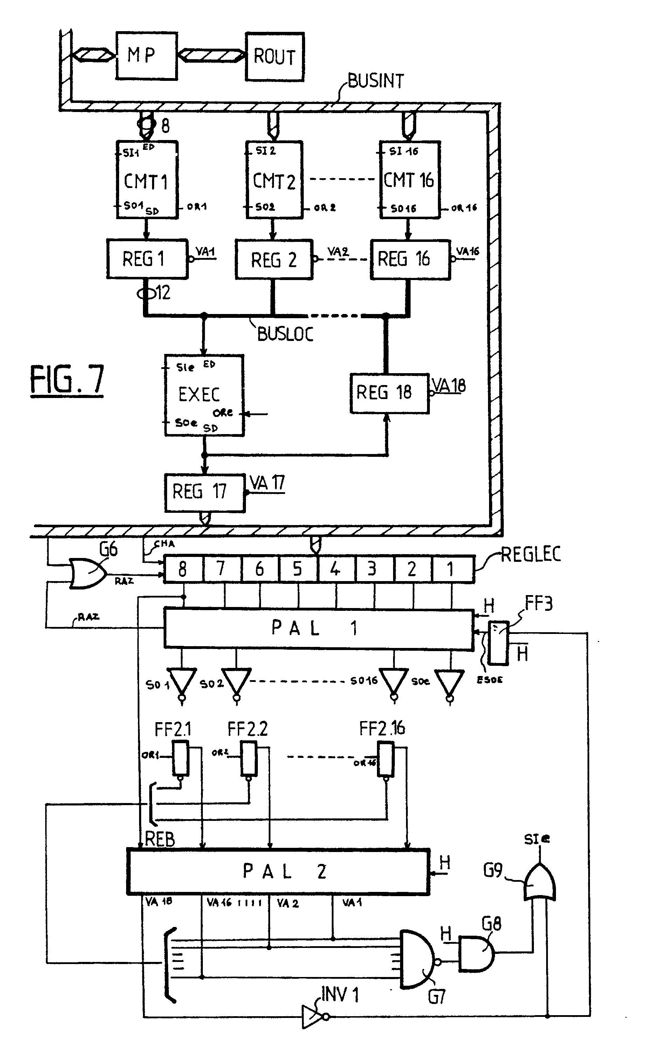

Dans la partie processeur de gestion montrée à la Fig. 7, on retrouve le microprocesseur MP relié au bus BUSINT. Une table de routage ROUT, reliée directement au microprocesseur MP, permet quand il lui applique un octet de routage lu dans la file GFOR, Fig. 5, de traduire cet octet en une adresse de liaison, c'est-à-dire l'adresse d'une ligne de sortie LS reliée à un module de sortie PS.

A la Fig. 7, au bus BUSINT sont reliées les entrées de données d'autant de files qu'il y a de liaisons de sortie, soit dans l'exemple décrit aux entrées ED de seize files CMT1 à CMT16. Chaque file CMTi a son entrée ED reliée au bus BUSINT et sa sortie associée à un tampon REGi dont la sortie est reliée par un bus local BUSLOC à l'entrée ED d'une file EXEC. La sortie SD de la file EXEC est associée à deux tampons REG17 et REG18, la sortie du tampon REG18 étant également reliée à l'entrée ED de la file EXEC par le bus BUSLOC tandis que la sortie du tampon REG17 est reliée au bus BUSINT.

A la Fig. 7, sont également montrées pour chaque file CMTi, les entrées de commande d'écriture SIi et le lecture SOi, et la sortie d'état non vide ORi, ainsi que pour chaque tampon associé REGi, l'entrée de validation VAi. La file EXEC comporte aussi les entrées SIe et SOe ainsi que la sortie ORe. Enfin, les tampons REG17 et REG18 ont leurs entrées de validation VA17 et VA18.

Comme on l'a mentionné plus haut, par le bus BUSINT, le microprocesseur MP extrait de la file GFOR l'octet de routage et, après consultation de la table ROUT, en déduit l'identité de la liaison sortante sur laquelle le paquet devra être délivré par le centre de transit. Le microprocesseur MP écrit donc dans la file CMTi correspondant à la liaison sortante l'adresse du module de transit PTi, PAj prévu pour mémoriser le paquet.

Chaque file CMTi transmet, accompagnées de sa propre identité, ses coordonnées à la file EXEC qui rassemble donc les requêtes de sortie. On notera que les fils d'entrée des files CMTi sont au nombre de huit, correspondant à l'adresse d'un module de transit, tandis que ceux de la file EXEC sont au nombre de 12 pour ajouter l'identité de la file CMTi.

Dans la pratique, la lecture des contenus des files CMTi dans la file EXEC est commandée par un circuit de commande de lecture qui est aussi montré à la Fig. 7. Il faut noter que ce circuit de commande fonctionne de manière que, dans la file EXEC, il n'y a qu'un seul mot à la fois provenant d'une file CMTi. Autrement dit, dans la file EXEC, il n'y a pas simultanément deux mots provenant de la même file CMTi.

A chaque mot lu dans la file EXEC et transmis au microprocesseur MP, à travers le tampon REG17, par le bus BUSINT, le microprocesseur cherche, suivant un processus qui sera décrit dans la suite, si le paquet mémorisé correspondant peut être transmis. Si le résultat de la recherche est positif, il en déduit les coordonnées de sortie. Si la recherche est négative, le mot est réécrit dans la file EXEC par l'intermédiaire du tampon REG18.

Le circuit de commande de lecture des files CMTi et de la file EXEC comprend un registre d'état REGLEC qui mémorise un mot de huit bits, dont l'entrée de données et l'entrée de chargement CHA sont reliées au bus BUSINT, et dont les sorties individuelles sont reliées aux entrées correspondantes d'un automate PAL1. Dans le mot mémorisé dans le registre REGLEC, les quatre bits de poids faibles identifient une des files CMTi, le cinquième indique l'ordre de lire la file EXEC vers le microprocesseur, le sixième indique l'ordre de lire, à la fois, la file EXEC et la file CMTi identifiée par les quatre bits de poids faibles, le septième bit indique l'ordre de lire la file CMTi désignée seule, et le huitième indique l'ordre d'activer le tampon REG18 pour reboucler le mot lu dans la file EXEC vers son entrée.

Le circuit PAL1 comporte encore une entrée d'horloge H et une entrée de comande ESOE, ainsi qu'une sortie de remise à zéro reliée à une entrée d'une porte OU G6 dont la sortie est reliée à l'entrée de remise à zéro du registre REGLEC. L'automate PAL1 traduit les informations appliqués à ses entrées de données pour délivrer des ordres de lectures individuels vers les sorties SO1 à SO16 et SOe des files CMTi et EXEC.

Le circuit de commande de lecture comprend encore seize bascules FF2.1 à FF2.16 dont les entrées d'horloge sont respectivement reliées aux sorties OR1 à OR16 des files CMT1 à CMT16. Les sorties Q de ces bascules sont reliées, ainsi que la sortie de huitième bit du registre REGLEC, aux entrées de données d'un automate PAL2 dont les sorties sont reliées aux entrées de validation VA1 à VA16 et VA18 des tampons REG1 à REG16 et REG18. L'automate PAL2 a également une entrée d'horloge H. Il a pour fonction d'éviter des conflits d'accès des files CMTi à la file EXEC.

Les sorties VA1 à VA16 de l'automate PAL2 sont encore reliées aux entrées de remise à zéro des bascules FF2.1 à FF2.16 et aux entrées d'un circuit NI G7 dont la sortie est reliée à l'entrée d'une porte ET G8.

La sortie VA18 est reliée à l'entrée d'une inverseur INV1 dont la sortie est reliée, d'une part, à l'entrée D d'une bascule dont l'entrée d'horloge reçoit le signal d'horloge H et dont la sortie Q est relié à l'entrée ESOE de l'automate PAL1, et d'autre part, à l'entrée d'une porte OU G9. La seconde entrée de la porte OU est reliée à la sortie de la porte ET G8 et sa sortie est reliée à l'entrée SIe de la file EXEC. La bascule FF3 a pour effet de retarder légèrement l'ordre de lecture délivré par le circuit PAL1 par rapport à l'ordre d'écriture SIe.

En ce qui concerne le fonctionnement du processeur de gestion de la Fig. 7, le microprocesseur MP est programmé pour être maître de chaque mot à inscrire dans le registre REGLEC.

Pour lire la file EXEC seule, il met le 5$^e$ bit du mot à "1", valide le tampon REG17 et reçoit l'identité de la liaison de sortie, c'est-à-dire l'identité de la file CMTi, et l'identité du module de transit concernés. Il recherche s'il existe alors simultanément les conditions suivantes: un canal sur le bus temporel de sortie BHDS est libre, le secteur du module de transit concerné est libre et la liaison de sortie, c'est-à-dire la ligne sortante demandée et son module de sortie, est libre. Si la réponse est positive, il met le 6$^e$ bit du registre REGLEC à "1" pour extraire le mot de douze bits correspondant de la file EXEC et fait inscrire dans les quatre premiers bits l'identité de la même file CMTi, ce qui provoque la lecture du premier mot de celle-ci dans la file EXEC. Un nouveau mot concernant la même liaison est donc écrit dans la file EXEC et on est sûr qu'il n'existe dans la file EXEC qu'un seul mot provenant de la file CMTi.

Si la réponse est négative, le microprocesseur MP met le $8^e$ à "1" ce qui a pour effet de valider VA18 à travers le circuit PAL2 et de pouvoir lire le premier mot de la file EXEC pour le réécrire à son entrée, c'est-à-dire faire un rebouclage. De cette manière, on est assuré que l'ordre des paquets transmis vers les modules de sortie est toujours respecté.

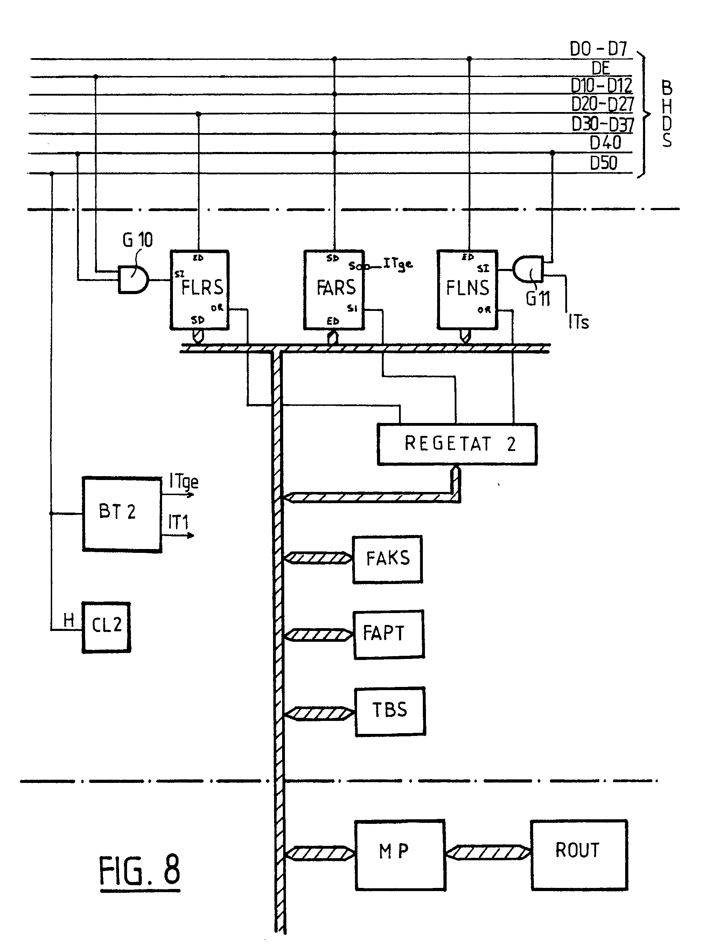

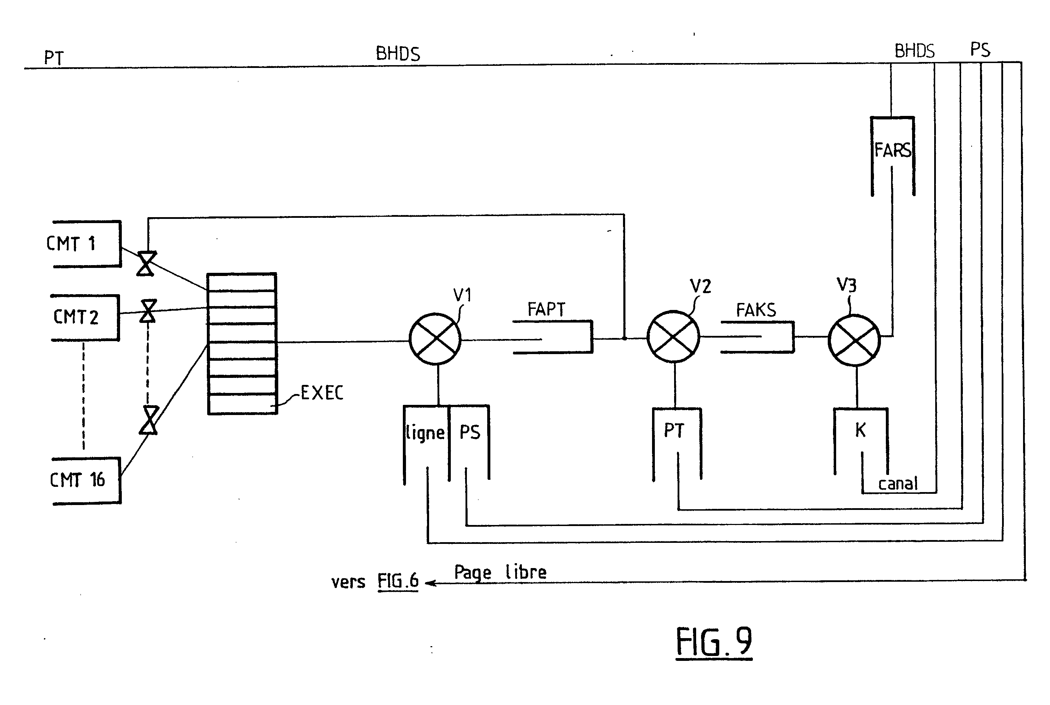

Le diagramme de la Fig. 9 illustre la procédure de recherche des ressources de sortie par le microprocesseur MP. Dans ce diagramme, on retrouve schématiquement les files CMT1 à CMT16 qui correspondent aux différentes liaisons de sortie, lesquelles sont sélectivement reliables à la file EXEC laquelle permet une scrutation des demandes par le microprocesseur MP. La sortie de la file EXEC conduit à un premier verrou symbolique V1 qui s'ouvre quand la ligne de sortie LS demandée et le module de sortie PS qui dessert cette ligne sont tous deux libres. Pour cela les identités des lignes sortantes et des modules de sortie libres sont inscrites dans une table TBS, Fig. 8, que le microprocesseur MP peut consulter. La sortie du verrou V1 est reliée à une file FAPT, Fig. 8, dans laquelle d'inscrivent les identités des couples ligne-module qui sont demandés.

La sortie de la file FAPT est reliée à un second verrou symbolique V2 qui est ouvert quand le microprocesseur MP, ayant consulté une mémoire TBS, a trouvé que le secteur PTi, qui contient la page dans laquelle est emmagasiné le paquet, est libre. Dans ce cas, l'identité du module de transit PTi, PAj, plus celle du couple sortant de la file FAPT, sont transmises par le verrou V2. Par contre, si le secteur du module de transit concerné n'est pas libre, la première requête à servir dans la file EXEC est réinscrite à son entrée, la requête suivante étant alors traitée par le microprocesseur.

Quand le verrou V2 s'ouvre, une file FAKS, qui sert à mémoriser les numéros des canaux de sortie libres et dont la sortie aboutit à une troisième verrou V3 est consultée par le microprocesseur MP. Si celui-ci trouve un canal libre, il ouvre le troisième verrou V3 qui permet l'inscription dans la file FARS des identités du couple ligne-sortie, du canal et du module de transit concerné.

On notera qu'un fil "Page libre" est montré qui part du bus temporel de sortie BHDS et va vers la Fig. 6. Ce fil sert à montrer que l'identité de chaque page libérée après transmission du paquet qu'elle contenait est transmise à la table TBE que le microprocesseur consulte avant de permettre un transfert provenant d'un module d'entrée.

Dans le module de gestion GR, l'interface d'accès au bus temporel de sortie BHDS, Fig. 8, comprend deux files d'entrée FLRS et FLLS, et une file de sortie FARS. Les sorties SD des files FLRS et l'entrée ED de la file FARS sont reliées au microprocessur MP par le bus interne BUSINT. Cette interface comprend encore une horloge CL2 et une base de temps BT2 semblable à l'horloge CL1 et la base de temps BT1.

Les sorties OR des files d'entrée FLRS et FLLS sont respectivement reliées, par les fils de sortie ORFLRS et ORFLLS, aux entrées correspondantes du registre REGETAT2. L'entrée SI de la file de sortie FARS est reliée, par le fil SIFARS, à une sortie correspondante du registre REGETAT2.

L'entrée ED de la file FLRS est reliée aux fils D20 à D27 du bus BHDS et son entrée SI est reliée à la sortie d'une porte G10 à deux entrées dont les deux entrées sont respectivement reliées aux fils D8 et D40 du bus BHDS. L'entrée ED de la file FLLS est reliée aux fils D0 à D7 du bus BHDS et son entrée SI est reliée à la sortie d'une porte ET G11 à deux entrées dont l'une est reliée au fil D40 et l'autre à la sortie ITs d'une base de temps BTé. La sortie SD de la file FARS est reliée aux fils D0 à D7, D10 à D12 et D30 à D37 du bus BHDS. L'entrée SO de la file FARS est reliée à la sortie ITge de la base de temps BT2.

Quand le microprocesseur MP a trouvé des ressources pour transmettre un paquet sortant, il écrit dans la file FARS les identités du canal affecté au transfert, du module de sortie, de la ligne sortante et du point de transit dans lequel le paquet est alors emmagasiné. A chaque intervalle de temps ITge du canal de signalisation C0, la file FARS transmet un tel ensemble d'identités sur le bus BHDS, accompagné d'un signal VAL sur le fil D40.

On a également fait figurer sur la Fig. 8, les files FAKS, FAPT et la table TBS reliées au bus BUSINT.

Un module de sortie PSi, montré à la Fig. 10, est associé, dans l'exemple décrit, à quatre coupleurs de ligne sortante CS1 à CS4 qui sont respectivement reliés à quatre lignes sortantes LS1 à LS4. Chaque coupleur CS1 à CS4 est supposé recevoir du module de sortie PSi des données rangées en paquets et être capable de transmettre ces paquets sur chaque ligne sortante associée.

Le coupleur de sortie PSi comprend un tampon REGLS dont les entrées de données sont respectivement reliées aux fils D0 à D7 et D8 du bus de sortie BHDS, un registre RNL dont les entrées de données sont reliées aux fils D4 à D7, un registre RNC dont les entrées de données sont reliées aux fils D10 à D12, un comparateur COMPS dont des premières entrées de données sont reliées aux fils D0 à D3 et des secondes entrées de données aux sorties d'une carte CARS d'identité du module de sortie, un circuit logique LRIT dont les entrées de données sont reliées aux fils D20 à D27, une porte ET G12 dont une entrée est reliée à la sortie du comparateur COMPS et l'autre au fil D40, une porte NI G13 à trois entrées dont la première entrée est reliée au fil D8, la seconde au fil D40 et la troisième à la sortie ITK du circuit LRIT, et une porte NI G14 à trois entrées dont la première est reliée au fil D40, la seconde au fil D50 et la troisième à la sortie ITK du circuit LRIT.

Le tampon REGLS a une entrée de validation de lecture reliée à la sortie ITK du circuit LRIT et sa sortie de données est reliée en parallèle aux entrées ED de quatre files FSL1 à FSL4 dont les sorties SD sont respectivement reliées aux entrées de quatre tampons RSL1 à RSL4. Les entrées de commande de lecture des tampons RSL1 à RSL4 sont reliées à des fils de commande vl1 à vl4 provenant respectivement des coupleurs CS1 à CS4, et leurs sorties de données sont respectivement reliées aux entrées de données de ces coupleurs de sortie. Le tampon REGLS, les files FSL1 à FSL4 et les tampons RSL1 à RSL4 traitent des mots de neuf bits. Les fils de sortie correspondant aux neuvièmes bits dans les tampons RSL1 à RSL4 sont respectivement reliés aux premières entrées de quatre portes NI G15.1 à G15.4 dont les secondes entrées sont respectivement reliées aux fils de commande de lecture de ces tampons et dont les sorties sont respectivement reliées aux entrées d'horloge de quatre bascules FF4.1 à FF4.4.

La sortie de données du registre RNL est reliée à l'entrée d'un décodeur DECODS à quatre sorties SL1 à SL4 correspondant respectivement aux quatre coupleurs de sortie CS1 à CS4. Les sorties SL1 à SL4 sont respectivement reliées aux premières entrées de quatre portes NI G16.1 à G16.4 dont les secondes entrées sont reliées à la sortie de la porte G14 et dont les sorties sont respectivement reliées aux entrées SI des quatre files FSL1 à FSL4.

La registre RNC a sa sortie reliée à une entrée K du circuit logique LRIT. La sortie de la porte G12 est reliée, d'une part, aux entrées de commande d'écriture des registres RNL et RNC et, d'autre part, à l'entrée d'horloge d'une bascule FF5 dont la sortie Q est reliée à une entrée d'activation du circuit logique LRIT.

Le sortie logique LRIT a trois sorties ITge ITs(i) et ITK délivrant respectivement les signaux correspondants: c'est-à-dire les signaux identifiant les intervalles de temps ITge et ITs(i) alloués au module de sortie dans le canal C0 et les intervalles de temps ITK faisant partie du canal K alloué par le module de gestion pour la réception d'un paquet dans le module de sortie. La sortie ITge est reliée à une entrée d'activation du comparateur COMPS.

Les sorties Q des bascules FF4.1 à FF4.4 sont respectivement reliées à quatre entrées d'un circuit automate PAL3 dont quatre sorties correspondantes rzs1 à rzs4 sont reliées aux entrées de remise à zéro des bascules FF4.1 à FF4.4. Par ailleurs, le circuit PAL3 a une entrée d'horloge H, une sortie de données reliée à l'entrée d'une file LIBE à mots de quatre bits et une sortie de commande reliée, par l'intermédiaire d'un inverseur IS, à l'entrée SI de la file LIBE. La sortie SD de la file LIBE est reliée à l'entrée d'un tampon RIBE dont l'entrée de validation est reliée à la sortie ITs(i) du circuit LRIT et dont la sortie est reliée aux fils D4 à D7 du bus BHDS. La sortie OR de la file LIBE est reliée, d'une part, à l'entrée D d'une bascule FF6 et, d'autre part, à l'entrée de remise à zéro d'une bascule FF7. La sortie Q de la bascule FF5 est reliée à l'entrée SO de la file LIBE. Les entrées d'horloge des bascules FF6 et FF7 sont reliées à la sortie ITs(i) du circuit LRIT. La sortie Q* de la bascule FF6 est reliée à l'entrée d'une porte de transmission G17 dont l'entrée de commande est aussi reliée à la sortie ITs(i) et dont la sortie est reliée au fil D40 du bus BHDS.

La sortie de la porte G13 est reliée à l'entrée d'horloge d'une bascule FF8 dont la sortie Q* est reliée à l'entrée de remise à zéro de la bascule FF5.

On va maintenant décrire le fonctionnement d'un module de sortie PSi et du module de gestion GR en ce qui concerne la transmission d'un paquet sortant d'un module de transit PTi, pAj vers le module de sortie PSi.

Le transfert d'un paquet implique que le module de sortie PSi est libre, que la ligne de sortie LSi est libre, que le secteur PTi est libre en lecture et qu'il existe un canal Ci libre. Dans un intervalle de temps ITge du canal Co du bus de sortie BHDS, par la file FARS, le module de gestion GR transmet, sur les fils D0 à D3, l'identité du module de sortie PSi, sur les fils D4 à D7, l'identité de la ligne LS1 à LS4 sortante, sur les fils D10 à D12, l'identité K du canal Ci, sur les fils D30 à D37, l'identité du module de transit et, sur le fil D40, le signal VAL. Bien entendu, l'horloge est toujours distribuée sur le fil 50 et l'intervalle de temps ITge se reconnaît sur les fils D20 à D27.

Dans le module de sortie PSi, l'intervalle de temps ITge est reconnu dans le circuit logique LRIT qui active le comparateur COMPS. Dans le comparateur COMPS, l'identité du module est comparée avec celle qui est inscrite dans la mémoire CARS. Dans le module de sortie ainsi sélecté, la porte G12 est activée par son entrée recevant le signal VAL et la sortie du comparateur COMPS. La sortie de la porte G12 valide les tampons RNL et RNC, et envoie un signal d'horloge à la bascule FF5 dont la sortie Q délivre au circuit LRIT un ordre de verrouillage qui force ce circuit à conserver en mémoire l'identité K du canal Ci sélecté pour l'échange.

Dans le décodeur DECODS, est décodée l'identité de la ligne sortante LS1 à LS4 à laquelle le paquet est destiné et la sortie correspondante du décodeur DECODS est activée et garde cet état, soit, par exemple, la sortie SL1. Il en résulte qu'à chaque ITK suivant, la porte G16.1 sera ouverte, orientant ainsi les octets de données du paquet transitant par le tampon REGLS vers la file FSL1.

Le coupleur de sortie correspondant CSL1 lit le tampon de sortie RSL1 de la file FSL1 à son rythme propre par son fil vl1. Ainsi, le contenu du paquet passe dans la mémoire, non montrée, du coupleur de sortie CS1.

Quand le signal STOP, accompagnant le dernier octet du paquet, est reçu dans la porte G13, laquelle a ses deux autres entrées activées par le signal VAL, d'une part, et l'ITK identifiant le canal, d'autre part, la bascule FF8 change d'état et remet à zéro la bascule FF5, laquelle arrête l'émission des ITK par le circuit logique LRIT. L'entrée des données dans la file FSL1 est donc arrêtée par la porte G14 qui n'est plus activée jusqu'au prochain paquet à transmettre par le module de sortie PSi considéré.

Comme on l'a mentionné plus haut, les coupleurs CS1 à CS4 lisent respectivement les files FSL1 à FSL4 à leur rythme propre. Il peut donc arriver, les paquets à transmettre étant de longueurs différentes, qu'une file reçoive un paquet avant une autre file, mais que cette dernière soit vidée avant la première.

C'est pourquoi, quand le dernier mot d'un paquet, accompagné du signal STOP, est lu dans un des tampons RSL1 à RSL4, la porte correspondante G15.1 à G15.4 est activée et envoie un signal d'horloge à la bascule correspondante FF4.1 à FF4.4. L'automate PAL3 décode l'identité de la ligne de sortie qui a reçu un dernier octet de paquet et transmet son identité à la file LIBE. La fonction de l'automate PAL3 est, en pratique, de traiter les conflits qui peuvent se produire sur ses quatre entrées, car plusieurs files FSL1 à FSL4 peuvent être vidées au même instant, et d'écrire les identités des lignes libérées dans la file LIBE.

L'identité d'une ligne libérée est, à travers le tampon RIBE, transmis aux fils D4 à D7 du bus BHDS dans l'intervalle de temps ITs(i) suivant qui correspond au module de sortie PSi dans le canal de signalisation Co. Par ailleurs, la sortie OR de la file LIBE a appliqué à la bascule FF6 un signal qui est mémorisé au temps ITs(i) si bien que, par la porte G10 activée au même instant, un signal VAL est appliqué au fil D40 du bus BHDS. La bascule FF7 recopie la bascule FF6 à la fin de l'intervalle de temps ITs(i) et elle réactive l'entrée SO de la file LIBE. La sortie OR de la file LIBE remet ensuite la bascule FF7 à zéro.

Dans l'intervalle de temps ITs(i), le module de gestion GR reçoit donc, par l'intermédiaire de la file FLLS, l'identité de la ligne sortante qu'il peut considérer comme libre. Il faut encore noter qu'à l'instant où le module de transit PTi, PAj a envoyé le dernier octet du paquet, le signal STOP qui l'accompagne permet d'activer la porte G10, laquelle fait lire dans la mémoire FLRS le contenu des fils D20 à D27, c'est-à-dire un intervalle de temps qui définit un canal. Autrement dit, la file FLRS enregistre les identités des canaux au fur et à mesure qu'ils sont libérés. L'écriture de l'identité d'une ligne sortante dans la file FLLS est commandée par la porte G4 laquelle est activée, d'une part, par sa première entrée qui reçoit le signal VAL et, d'autre part, par sa seconde entrée qui est activée pendant chaque intervalle de temps ITs, c'est-à-dire chaque intervalle de temps du canal de signalisation Co pendant lequel un module de sortie transmet des données au module de gestion GR.

On notera que, dans l'exemple de réalisation qui vient d'être décrit, chaque bus temporel BHDE ou BHDS comprend huit fils D20 à D27 par lesquels le module de gestion GR délivre la succession des numéros des intervalles de temps. Les liaisons entre la base de temps BT1 ou BT2 et les bus n'ont pas été représentées pour ne pas surcharger les dessins, mais elles sont évidentes pour l'homme de métier. Une autre solution aurait constitué à compter cycliquement dans chaque module d'entrée ou de sortie les signaux d'horloge H en partant d'un état initial. Toutefois cette seconde solution nécessite une initialisation de tous les modules. Par contre, avec la solution qui a été décrite, seul le module de gestion doit être initialisé ce qui est avantage pour une affectation dynamique.

Par ailleurs, dans l'exemple décrit, chaque intervalle de temps pair du canal Co est affecté individuellement à un module d'entrée ou de sortie, mais que les intervalles de temps impairs ITge sont affectés au transmission de messages de service provenant du module de gestion, le module d'entrée ou de sortie, auquel le message de signalisation est addressé, se reconnaissant par son identité qui est dans le même intervalle de temps transmis sur le canal de données. Bien évidemment, les intervalles de temps impairs du canal Co pourraient être affectés individuellement aux modules d'entrée ou de sortie. Toutefois, la première solution permet d'augmenter la rapidité du centre de commutation de transit, car le module de gestion peut, dès qu'il a trouvé les ressources d'entrée ou de sortie nécessaires, utiliser l'intervalle de temps ITge suivant, au lieu d'attendre celui qui correspond au module adressé. Enfin, comme les modules de sortie desservent plusieurs lignes sortantes, il est de tout manière nécessaire de transmettre l'identité de cette ligne.

## Revendications

1. Système de commutation de paquets de données comprenant une pluralité de modules d'entrée (Pei) recevant des paquets entrants, une pluralité de modules de sortie (PSi) transmettant des paquets sortants, une mémoire centralisée (M) à double accès et divisée en modules de transit (PTi, PAj), et un module de gestion de ressources (GR), comprenant un bus temporel d'entrée (BHDE) pour relier temporellement des modules d'entrée sélectés (PEi) à des modules de transit (PTi, PAj) respectivement sélectés dans la mémoire centralisée (M), et un bus temporel de sortie (BHDS) pour relier temporellement des modules de transit (PTi, PAj) sélectés dans la mémoire centralisée (M) à des modules de sortie (PSi) respectivement sélectés, le module de gestion de ressources (GR) étant relié bidirectionnellement aux modules d'entrée (PEi) et à la mémoire centralisée (M) par le bus temporel d'entrée (BHDE), d'une part, et aux modules de sortie (PSi) et à la mémoire centralisée (M) par le bus temporel de sortie (BHDS), d'autre part, caractérisé en ce que chaque bus temporel, soit d'entrée (BHDE), soit de sortie (BHDS), comprend une pluralité d'ensemble de fils de données (D0 à D7, D8, D10 à D12, D30 à D37) transmettant chacun des multiplets de données en parallèle, et un ensemble de fils d'identités temporels (D20 à D27) transmettant les identités d'intervalles de temps formant des trames récursives d'intervalles de temps, chaque trame contenant $2^k$ intervalles de temps et, dans la succession de trames, les intervalles de temps temporellement séparés par $2^{k'}$ intervalles, avec k' plus petit que k, formant un canal temporel de transmission, les canaux temporels de transmission étant au nombre de $2^{k-k'}$, un desdits canaux temporels étant réservé aux messages de signalisation entre les modules, soit d'entrée (PEi), soit de sortie (PSi), et le module de gestion des ressources (GR).

2. Système de commutation de paquets suivant la revendication 1, caractérisé en ce que, dans le canal temporel réservé aux messages de signalisation, les intervalles de temps sont chacun alloué un module.

3. Système de commutation de paquets suivant la revendication 2, caractérisé en ce que, dans le canal temporel réservé à la signalisation, les intervalles de rangs pairs (ou impairs) (ITs(i)) sont respectivement alloués aux modules d'entrée (PEi) ou de sortie (PSi), selon qu'il s'agit du bus temporel d'entrée (BHDE) ou de sortie (BHDS), et les intervalles de rangs impairs (ou pairs) (ITge) au module de gestion des ressources.

4. Système de commutation de paquets suivant l'une des revendications 1 à 3, caractérisé en ce que, pour chaque transmission de paquets vers la mémoire centralisée (M) sur le bus temporel d'entrée (BHDE) ou provenant de la mémoire centralisée (M) sur le bus temporel de sortie (BHDS), est affecté un canal temporel sélecté parmi les canaux temporels autres que le canal temporel réservé aux messages de signalisation.

5. Système de commutation de paquets suivant l'une des revendications 1 à 4, caractérisé en ce que la pluralité d'ensemble de fils de données comprend un premier ensemble de fils (D0 à D7) servant à transmettre des données de paquets ou des identités de modules d'entrée (PEi) ou de sortie (PSi), un second ensemble de fils (D30 à D37) servant à transmettre des identités de modules de transit (PTi, PAj), un troisième ensemble de fils (D8) servant à transmettre des signaux de fin de paquet (STOP), et un quatrième ensemble de fils (D10 à D12) servant à transmettre des allocations de canal.

6. Système de commutation de paquets suivant la revendication 5, caractérisé en ce que, dans le bus temporel d'entrée (BHDE), le premier ensemble de fils (D0 à D7) sert, d'abord, dans l'intervalle de rang pair (ou impair) (ITs(i)) affecté à un module d'entrée (PEi), à transmettre de ce module d'entrée (PEi) vers le module de gestion de ressources (GR) les données de routage d'un paquet à commuter, puis, en réponse, dans l'un des intervalles de rangs impairs (ou pairs) (ITge) du canal temporel réservé aux messages de signalisation (CO), l'identité du même module d'entrée (PEi) qui reçoit dans le même intervalle de temps, par le quatrième ensemble de fils (D10 à D12), l'identité du canal alloué (K), la mémoire (M) recevant également, toujours dans le même intervalle de temps, l'identité du canal alloué (K) par le quatrième ensemble de fils (D10 à D12) plus l'identité du module de transit (PTi, PAj) sélecté pour mémoriser le paquet par le second ensemble de fils (D30 à D37), l'échange des données utiles du paquet étant effectué sur le premier ensemble de fils (D0 à D7) dans les intervalles de temps successifs du canal alloué (K) entre le module d'entrée (PEi) et le module de transit (PTi, PAj) sélecté pour lui, jusqu'au dernier multiplet du paquet qui est accompagné du signal de fin de paquet transmis sur le troisième ensemble de fils (D8) et reçu à la fois dans la mémoire (M) et le module de gestion des ressources (GR).

7. Système de commutation de paquets suivant la revendication 5 ou 6, caractérisé en ce que, dans le bus temporel de sortie (BHDS), le premier ensemble de fils (D0 à D7) sert, d'abord, dans l'intervalle de rang impair (ou pair) (ITge) du canal temporel réservé aux messages de signalisation (CO), l'identité du module de sortie (PSi) destiné à transmettre le paquet, ledit module de sortie (PSi) recevant dans le même intervalle de temps (ITge) l'identité du canal alloué (K), la mémoire (M) recevant également, toujours dans le même intervalle de temps (ITge), l'identité du canal alloué (K) par le quatrième ensemble de fils (D10 à D12) plus l'identité du module de transit (PTi, PAj) dans lequel est mémorisé ledit paquet par le second ensemble de fils (D30 à D37), l'échange des données utiles du paquet étant effectué sur le premier ensemble de fils (D0 à D7) dans les intervalles de temps successifs du canal alloué (K) entre le module de transit (PTi, PAj), jusqu'au dernier multiplet du paquet qui est accompagné du signal de fin de paquet (STOP) transmis sur le troisième ensemble de fils (D8) et reçu à la fois dans le module de sortie (PSi) et le module de gestion des ressources (GR).

## Claims

1. Data packet switching system comprising many input modules (Pei) receiving incoming packets, many output modules (PSi) transmitting outgoing packets, a double access main memory (M) divided into transit modules (PTi, PAJ), and a resource management module (GR), comprising an input time-division bus (BHDE) to connect the input modules selected (PEi) on a time-division basis with transit modules (PTi, PAj) respectively selected in the main memory (M), and an output time-division bus (BHDS) to connect on a time-division basis the transit modules (PTi, PAj) selected in the main memory (M) with the output modules (PSi) respectively selected, the resource management module (GR) being connected bidirectionally with the input modules (PEi) and the main memory (M) by the input time-division bus (BHDE), on the one hand, and the output modules (PSi) and the main memory (M) by the output time-division bus (BHDS) on the other hand, characterized by the fact that each time-division bus, be it input (BHDE) or output (BHDS) comprises a set of data wires (D0 to D7, D8, D10 to D12, D30 to D37) each transmitting types of data in parallel, and a set of time-division identity wires (D20 to D27) transmitting the identities of time intervals making up recursive time interval frames, each frame containing $2^k$ time intervals and, in the sequence of frames, the time intervals separated on a time-division basis by $2^{k'}$ intervals, with k' being smaller than k, forming a time-division transmission channel, there being $2^{k-k'}$ time-division transmission channels, of the these time-division channels being reserved for signalling messages between the modules, either input (PEi) or output (PSi), and the resource management module (GR).

2. Packet switching system in accordance with claim 1, chracterised by the fact that the time intervals in the time-division channel reserved for signalling messages are each allocated a module.

3. Packet switching system in accordance with claim 2, characterised by the fact that in the time-division channel reserved for signalling, the even (or odd) intervals (ITs(i) are respectively allocated to the input (PEi) or output (PSi) modules, depending on whether the input time-division bus (BHDE) or the output time-division bus (BHDS) is concerned, and the odd intervals (or even) (ITge) are allocated to the resource management module.

4. Packet switching system in accordance with one of claims 1 to 3, characterised by the fact that for each packet transmission towards the main memory (M) on the input time-division bus (BHDE) or from the main memory (M) on the output time-division bus (BHDS), a time-division channel is allocated, selected from the time-division channels other than that reserved for signalling messages.

5. Packet switching system in accordance with one of claims 1 to 4, characterised by the fact that the many sets of data wires include a first set (D0 to D7) used to transmit data of packets or identities of input modules (PEi) or output modules (PSi), a second set (D30 to D37) used to transmit identities of transit modules (PTi, PAj), a third set (D8) used to transmit end of packet (STOP) signals, and a fourth set (D10 to D12) used to transmit channel allocations.

6. Packet switching system in accordance with claim 5, characterised by the fact that the first set of wires (D0 to D7) in the input time-division bus (BHDE) is used, first of all, in the even (or odd) interval (ITs(i)) allocated to an input module (PEi), to transmit the routing data of a packet to be switched from this input module (PEi) towards the resource management module (GR), then, in reply, in one of the odd (or even) intervals (ITge) of the time-division channel reserved for signalling messages (CO), the identity of the same input module (PEi) which receives, in the same time interval, by means of the fourth set of wires (D10 to D12), the identity of the channel allocated (K), the memory (M) also receiving the identity of the channel allocated (K) by means of the fourth set of wires (D10 to D12), again in the same time interval, plus the identity of the transit module (PTi, PAj) selected to store the packet by means of the second set of wires (D30 to D37), the exchange of useful data of the packet being effected on the first set of wires (D0 to D7) in the subsequent time intervals of the channel allocated (K) between the input module (PEi) and the transit module (PTi, PAj) selected for it, until the last byte of the packet which is accompanied by the end of packet signal transmitted on the third set of wires (D8) and received in the memory (M) and the resource management module (GR) simultaneously.

7. Packet switching system in accordance with claim 5 or 6, characterised by the fact that the first set of wires (D0 to D7) in the output time-share bus (BHDS) serves (sic), first of all, in the odd (or even) time interval (ITge) of the time-division channel reserved for signalling messages (CO), the identity of the output module (PSi) destined to transmit the packet, the said output module (PSi) receiving, in the same time interval, the identity of the channel allocated (K), the memory (M) also receiving, again in the same time interval (ITge), the identity of the channel allocated (K) by the fourth set of wires (D10 to D12) plus the identity of the transit module (PTi, PAj) in which the said packet is stored by the second set of wires (D30 to D37), the exchange of useful data of the packet being effected on the first set of wires (D0 to D7) in the subsequent time intervals of the channel allocated (K) between the transit module (PTi, PAj) until the last byte of the packet which is accompanied by the end of packet signal (STOP) transmitted on the third set of wires (D8) and received simultaneously in the output module (PSi) and the resource management module (GR).

## Patentansprüche

1. Datenpaketvermittlungssystem mit einer Vielzahl von eingehende Daten empfangenden Eingangsmodulen (Pei), einer Vielzahl von abgehende Daten liefernden Ausgangsmodulen (PSi), einem zentralen Speicher (M), dar einen doppelten Zugriff aufweist und in Transitmodule (PTi, PAj) aufgeteilt ist, mit einem Hilfs-Steuermodul (GR), der einen zeitseriellen Eingangsbus (BHDE) für die zeitserielle Verbindung der Eingangsmodule (PEi) mit den entsprechend in dem zentralen Speicher (M) ausgewählten Transitmodulen (PTi, PAj) aufweist, mit einem zeitseriellen Ausgangsbus (BHDS) zur zeitseriellen Verbindung der in dem zentralen Speicher (M) ausgewählten Transitmodule (PTi, PAj) mit den entsprechend ausgewählten Ausgangsmodulen (PSi), wobei der Hilfssteuermodul (GR) bidirektional einerseits mit den Eingangsmodulen (PEi) und über den zeitseriellen Eingang (BHDE) mit dem zentralen Speicher (M) und andererseits über den zeitseriellen Ausgangsbus (BHDS) mit den Ausgangsmodulen (PSi) und mit dem zentralen Speicher (M) verbunden ist, dadurch gekennzeichnet, daß jeder zeitserielle Bus wie der Eingangsbus (BHDE) oder der Ausgangsbus (BHDS) eine Vielzahl von Einheiten von Datenleitungen (D0 bis D7, D8, D10 bis D12, D30 bis D37), von denen jede parallele Datenbytes führt, sowie eine Einheit von zeitseriellen Identitätsdrähten (D20 bis D27) aufweist, die die Identitäten Von aufeinanderfolgende Zeitintervall-Rahmen bildenden Zeitintervallen Übertragen, daß jeder Rahmen $2^k$ Zeitintervalle enthält und in der Folge von Rahmen die durch $2^k$, Intervalle mit k' kleiner als k getrennten zeitseriellen Zeitintervalle eines zeitseriellen Übertragungskanal bilden, daß die zeitseriellen Übertragungskanäle eine Anzahl von $2^{k-k'}$ bilden, daß einer dieser zeitseriellen Kanäle für die Signalisierungs-Informationen zwischen den Modulen wie Eingang (PEi) oder Ausgang (PSi) und dem Hilfs-Steuermodul (GR) reserviert ist.

2. Paketvermittlungssystem nach Anspruch 1, dadurch gekennzeichnet, daß in dem für die Signalisierungs-Informationen reservierten zeitseriellen Kanal den Zeitintervallen je ein Modul zugeordnet ist.

3. Paketvermittlungssystem nach Anspruch 2, dadurch gekennzeichnet, daß in dem für die Signalisation reservierten zeitseriellen Kanal die geradzahligen (oder ungeradzahligen) Intervalle (ITs(i)) jeweils Eingangsmodulen (PEi) oder Ausgangsmodulen (PSi) zugeordnet sind, in Abhängigkeit davon, ob es sich um einen zeitseriellen Eingangsbus (BHDE) oder Ausgangsbus (BHDS) und um die ungeradzahligen (oder geradzahligen) Intervalle (ITge) am Hilfs-Steuermodul handelt.

4. Paketvermittlungssystem nach einem der Ansprüche 1 - 2, dadurch gekennzeichnet, daß für jede Paketübertragung Zu dem zentralen Speicher (M) über den zeitseriellen Eingangsbus (BHDE) oder von dem zentralen Speicher (M) über den zeitseriellen Ausgangsbus (BHDS) ein zeitserieller Kanal gebildet ist, der aus den zeitseriellen Kanälen außer dem für die Signalisierungs-Information reservierten zeitseriellen Kanal ausgewählt ist.

5. Paketvermittlungssystem nach einem der Ansprüche 1 - 4, dadurch gekennzeichnet, daß die vielzahl der Einheiten von Datendrähten eine erste Einheit von Drähten (D0 bis D7), die zur Übertragung der Datenpakete oder der Identitäten der Eingangsmodule (PEi) oder der Ausgangsmodule PSi) dienen, eine zweite Einheit von Drähten (D30 bis D 37), die zur Übertragung der Identitäten der Transit-Module (PTi, PAj) dienen, eine dritte Einheit von Drähten (D8), die zur Übertragung der Paket-Endsignale (STOP) dienen, und eine vierte Einheit von Drähten (D10 bis D12) enthält, die zur Übertragung der Kanal-Zuordnungen dienen.

6. Paketvermittlungssystem nach Anspruch 5, dadurch gekennzeichnet, daß in dem zeitseriellen Eingangsbus (BHDE) die erste Einheit von Drähten (D0 bis D7) in erster Linie in dem in einem Eingangsmodul (PEi) gebildeten geradzahligen (oder ungeradzahligen) Intervall (ITs(i)) zur Übertragung der Leitdaten eines umzuschaltenden Paketes von dem Eingangsmodul (PEi) zu dem Hilfs-Steuermodul (GR) dient, darauffolgend in einem der ungeradzahligen (oder geradzahligen) Intervalle (ITge) des für die Signalisierungs-Informationen (CO) reservierten zeitseriellen Kanals der Identität desselben Eingangsmoduls (PEi) dient, der in demselben Zeitintervall über die vierte Einheit von Drähten (D10 bis D12) die Identität des zugeordneten Kanals (K) empfängt, wobei der Speicher (M) wiederum in demselben Zeitintervall über die vierte Einheit von Drähten (D10 bis D12) die Identität des zugeteilten Kanals (K) plus der Identität des Transitmoduls (PTi, PAj) empfängt, der für die Speicherung des Paketes durch die zweite Einheit von Drähten (D30 bis D37) ausgewählt ist, wobei der Austausch von Nutzdaten des Paketes über die erste Einheit von Drähten (D0 bis D7) in den aufeinanderfolgenden Zeitintervallen des zugeordneten Kanals (K) zwischen dem Eingangsmodul (PEi) und dem für diesen ausgewählten Transitmodul (PTi, PAj) erfolgt, bis zum letzten Byte des Paketes, das von dem Paket-Endsignal begleitet ist, das über die dritte Einheit von Drähten (D8) übertragen und gleichzeitig in dem Speicher(M) und dem Hilfs-Steuermodul (GR) empfangen wird.

7. Paketvermittlungssystem nach Anspruch 5 oder 6, dadurch gekennzeichnet, daß in dem zeitseriellen Ausgangsbus (BHDS) die erste Einheit von Drähten (D0 bis D7) zunächst in dem ungeradzahligen (oder geradzahligen) Intervall (ITge) des reservierten zeitseriellen Kanals für die Signalisierungs-Informationen (CO), für die Identität des für die Übertragung des Paketes bestimmten Ausgangsmoduls (PSi) dient, wobei der Ausgangsmodul (PSi)in demselben Zeitintervall (ITge) die Identität des zugeordneten Kanals (K) empfängt und der Speicher (M) gleichermaßen, immer in demselben Zeitintervall (ITge), über die vierte Einheit von Drähten (D10 bis D12) die Identität des Zugeordneten Kanals (K) plus der Identität des Transitmoduls (PTi, PAj) empfängt, in dem das Paket über die zweite Einheit von Drähten (D30 bis D37) gespeichert ist, wobei der Austausch der Nutzdaten des Paketes über die erste Einheit von Drähten (D0 bis D7) in den aufeinanderfolgenden Zeitintervallen des zugeordneten Kanals (K) zwischen dem Transitmodul (PTi,PAj) erfolgt, bis zum letzten Byte des Paketes, das begleitet ist von dem Paket-Endsignal (STOP), das über die dritte Einheit von Drähten (D8) übertragen und gleichzeitig in dem Ausgangsmodul (PSi) und dem Hilfs-Steuermodul (GR) empfangen wird.

## FIG.1

## FIG.2

16

FIG. 3

attente
paquet arrivé dans
PEi
Phase 0

E1

E0

attente
ITs(i-1)
Phase 1

requête
évacuée de FOR
Phase 4

E2/T2

E4/T4

attente
fin de transmission
de paquet sur BHDE

Phase 2

E3/T3

fin de
transmission
vers BHDE

Phase 3

# FIG. 4

FIG. 5

PE        BHDE

FARE

FLRE

CMT 1

CMT 2

POR

octet de routage

GFOR

PTL   secteur   page   canal   FKE

PGL

CMT 16

MP

page libre      de FIG.9

FIG. 6

EP 0 251 965 B1

FIG.7

FIG. 8

FIG.9

FIG.10